(19) Europäisches Patentamt
European Patent Office
Office européen des brevets

(11) **EP 4 025 621 B1**

(12) **EUROPÄISCHE PATENTSCHRIFT**

(45) Veröffentlichungstag und Bekanntmachung des Hinweises auf die Patenterteilung:
**06.09.2023   Patentblatt 2023/36**

(21) Anmeldenummer: **20761847.1**

(22) Anmeldetag: **31.08.2020**

(51) Internationale Patentklassifikation (IPC):
*C08G 18/76* (2006.01)     *C08G 18/16* (2006.01)
*C08G 18/18* (2006.01)     *C08G 18/22* (2006.01)
*C08G 18/48* (2006.01)     *C08J 9/00* (2006.01)
*C08J 9/12* (2006.01)     *B29C 44/42* (2006.01)
*B32B 27/40* (2006.01)     *B32B 5/20* (2006.01)
*B32B 15/04* (2006.01)     *B32B 15/08* (2006.01)
*B32B 27/06* (2006.01)     *B29C 44/00* (2006.01)
*B29K 75/00* (2006.01)     *C08G 101/00* (2006.01)

(52) Gemeinsame Patentklassifikation (CPC):
**C08G 18/7664; B29C 44/005; B32B 5/20;
B32B 15/046; B32B 15/08; B32B 27/065;
C08G 18/163; C08G 18/1841; C08G 18/225;
C08G 18/4812; C08G 18/4816; C08G 18/4825;
C08G 18/4829; C08G 18/4833; C08G 18/7671;**

(Forts.)

(86) Internationale Anmeldenummer:
**PCT/EP2020/074178**

(87) Internationale Veröffentlichungsnummer:
**WO 2021/043700 (11.03.2021 Gazette 2021/10)**

(54) **VERFAHREN ZUR HERSTELLUNG EINES POLYURETHAN-BASIERTEN ISOLATIONSKÖRPERS**

METHOD FOR PRODUCING A POLYURETHANE-BASED INSULATION BODY

PROCÉDÉ DE FABRICATION D'UN CORPS D'ISOLATION À BASE DE POLYURÉTHANE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **06.09.2019   EP 19195825**

(43) Veröffentlichungstag der Anmeldung:
**13.07.2022   Patentblatt 2022/28**

(73) Patentinhaber: **Covestro Intellectual Property GmbH & Co. KG**
**51373 Leverkusen (DE)**

(72) Erfinder:
• **REITHMEIER, Marina**
**51069 Köln (DE)**
• **HAHN, Christian**
**51375 Leverkusen (DE)**
• **ALBERS, Reinhard**
**51375 Leverkusen (DE)**

(74) Vertreter: **Levpat**
**c/o Covestro AG**
**Gebäude K12**
**51365 Leverkusen (DE)**

(56) Entgegenhaltungen:
WO-A1-2015/109488     WO-A1-2018/018571
WO-A1-2018/162372     JP-A- H08 303 940

• ANONYMOUS: "Evacuated insulation panel", RESEARCH DISCLOSURE, KENNETH MASON PUBLICATIONS, HAMPSHIRE, UK, GB, Bd. 388, Nr. 57, 1. August 1996 (1996-08-01), XP007121249, ISSN: 0374-4353 in der Anmeldung erwähnt

(52) Gemeinsame Patentklassifikation (CPC): (Forts.)
**C08J 9/122;** B29C 44/42; B29K 2075/00;
B32B 2266/0278; C08G 2110/0025;
C08G 2110/0058; C08G 2330/50; C08J 2203/06;
C08J 2203/08; C08J 2375/04; Y02B 80/10

**Beschreibung**

Die vorliegende Erfindung betrifft einen Isolationskörper basierend auf einem evakuierten, offen-und feinzelligen Polyurethan/Polyisocyanurat(PUR/PIR)-Hartschaum, der durch Reaktion einer geeigneten Isocyanat-reaktiven Komponente mit einer Isocyanatkomponente und anschließender Evakuierung hergestellt wird, und einem die Gasdurchlässigkeit hemmenden und den offenzelligen PUR/PIR-Hartschaum umgebenden Barrierematerial.

PUR/PIR-Hartschäume sind seit langem bekannt. Ein wesentliches Einsatzgebiet ist die Temperaturisolierung. Dabei gewinnt die Anwendung von Vakuumisolationspaneelen (VIP) enthaltend PUR/PIR-Hartschäume zur Isolierung zunehmend an Bedeutung. Auf die Isolationseigenschaften von für die Vakuumisolation eingesetzten Schäumen hat die Schaumqualität entscheidenden Einfluss: zum einen sind eine möglichst kleine Zellgröße und möglichst homogene Zellgrößen vorteilhaft, zum anderen ist ein hoher Anteil an offenen Zellen günstig, um den Schaum gut evakuieren zu können.

Bei der Herstellung von PUR/PIR-Hartschäumen wird eine Isocyanat-reaktive Komponente, in welcher ein Treibmittel enthalten sein kann, mit einem Isocyanat zur Reaktion gebracht. Durch die Reaktion von Isocyanat mit gegebenenfalls vorhandenem Wasser kann als Treibmittel Kohlenstoffdioxid entstehen. Es ist auch bekannt, $CO_2$ als Treibmittel der Isocyanat-reaktiven Komponente oder der Reaktionsmischung direkt zuzusetzen.

Die schlagartige Entspannung $CO_2$-haltiger Reaktionsmischungen wird in WO 2001/98389 A1 beschrieben. Diese Patentanmeldung betrifft ein Verfahren zur Herstellung von Polyurethan-Blockschaum, wobei eine Kohlenstoffdioxid enthaltende Polyurethan-Reaktivmischung plötzlich von einem Druck oberhalb des Gleichgewichtlösungsdruckes des Kohlenstoffdioxids auf Normaldruck entspannt wird. Die flüssige Polyurethan-Reaktivmischung wird unter Freisetzung von gelöstem Kohlenstoffdioxid aufgeschäumt, die aufgeschäumte Mischung wird auf ein Substrat aufgebracht und anschließend zum Blockschaum ausgehärtet. Das Kohlenstoffdioxid wird zunächst bei einem wesentlich oberhalb des Gleichgewichtlösungsdruckes liegenden Druck in der Reaktivmischung oder mindestens in einer der Komponenten Polyol und Isocyanat vollständig gelöst. Anschließend wird der Druck auf einen Druck nahe des Gleichgewichtlösungsdruckes herabgesetzt, wobei zwischenzeitlich der Gleichgewichtlösungsdruck unter Freisetzung geringer Mengen des Kohlenstoffdioxids unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlenstoffdioxid wieder vollständig aufgelöst wird.

WO 2011/054868 A und WO 2011/054873 A offenbaren Herstellungsverfahren für fein- und geschlossenzellige, Urethangruppen-haltige Schaumstoffe unter Verwendung von $CO_2$ als überkritischem Treibmittel. Entscheidend für den Erfolg des Verfahrens ist jeweils die Herstellung einer Mikroemulsion aus Polyolphase und überkritischem $CO_2$. Diese soll durch die Verwendung geeigneter Tensidkomponenten eingestellt werden.

WO 2015/109488 A1 beschreibt ein Herstellungsverfahren von Urethangruppen-haltigen Schaumstoffen unter Verwendung von $CO_2$ als überkritischem Treibmittel. Bei dem Herstellverfahren handelt es sich um ein mehrstufiges Verfahren, wobei die Polyolkomponente zunächst mit $CO_2$ unter überkritischen Bedingungen gesättigt werden muss und anschließend auf die Reaktionsmischung mindestens Drücke von 100 bar einwirken müssen. Die hergestellten Schäume sollen kleine Zellgrößen und eine hohe Porosität aufweisen. Schäume mit einer hohen Offenzelligkeit werden jedoch nur bei Einsatz von Propylenoxid-basierten Polyethern und bei Verwendung von bestimmten zellöffnenden Tensiden erhalten. Das in der WO 2015/109488 A1 beschriebene Verfahren liefert Schäume mit Dichten >> 100 kg/m$^3$. Die gesamte Dauer für das mehrstufige Verfahren (Sättigen, Reagieren, Aushärten) im Reaktor beträgt >> 1 h, während der die überkritischen Bedingungen eingehalten werden müssen.

WO 2018/162372 A1 offenbart eine Polyolformulierung und ein Verfahren zur Herstellung eines fein- und offenzelligen PUR/PIR-Hartschaumes aus einer sehr speziellen Polyolformulierung. Das Verfahren zeichnet sich dadurch aus, dass Schäume mit niedrigen Rohdichten und einem einfachen Herstellverfahren erhalten werden. Des Weiteren offenbart WO 2018/162372, dass das Anlegen von Unterdruck an die beschriebenen PUR/PIR-Hartschäume zu besonders niedrigen Wärmeleitzahlen führt.

WO 2018/018571 A1 befasst sich damit, dass mit einem möglichst geringen Vakuum (1 - 500 mbar) niedrige Wärmeleitzahlen (8 - 14 mW·m$^{-1}$·K$^{-1}$) in Polyurethan(PU)-Schäumen erreicht werden können. Der Gasdruck soll nicht weiter gesenkt werden, da der Aufwand hinsichtlich Vorrichtung, Herstellungsbedingungen und langen Evakuierungszeiten zu groß und aufwendig und die Kosten zu hoch sind. Im aufgeführten Beispiel werden 39 min zur Herstellung des PU-Schaumes benötigt, welches für die Praxis viel zu lang ist. Da im Beispiel bei einem Gasdruck von 2 mbar nur ein Lambda-Wert von 13 mW·m$^{-1}$·K$^{-1}$ erreicht wird, erscheint es nicht möglich, eine Wärmeleitzahl von kleiner 13 mWm$^{-1}$K$^{-1}$ zu erhalten, soweit ein Vakuum von 2 bis 500 mbar eingestellt wird.

JP H08 303940 A offenbart einen Isolationskörper und ein Kühlgerät enthaltend den Isolationskörper. In einem mehrstufigen Prozess wird zunächst ein Polyurethanhartschaumstoff hergestellt, getrocknet, konfektioniert, von einer Barrierefolie umgeben und anschließend auf mindestens 300 Pa evakuiert. Das entstandene Vakuumisolationspaneel wird in einem nächsten Schritt von einem Hartschaum umgeben. Es wird keine Information über die Porengröße gegeben.

Der Forschungsbericht "Evacuated insulation panel", Kenneth Mason Publications, Hampshire, UK, Bd. 388, Nr. 57, 1. August 1996, ISSN: 0374-4353 offenbart evakuierte Isolationspaneele enthaltend offenzellige Schaumstoffe. Die Schaumstoffe weisen dabei Porengrößen von über 350 μm auf.

Die aus dem Stand der Technik bekannten Verfahren zur Herstellung von Isolationskörpern weisen eine zu lange Prozessdauer auf und/oder sie ergeben keinen feinzelligen Schaum.

Aufgabe war es daher, ein Verfahren zur Verfügung zu stellen, mit dem es möglich ist, in kurzer Verfahrenszeit einen Isolationskörper auf Basis eines harten PUR/PIR-Schaumes, der offen- und feinzellig ist, herzustellen und bei dem die vorgenannten Probleme aus dem Stand der Technik nicht oder nur in geringem Umfang auftreten.

Überaschenderweise konnte die Aufgabe durch das im Folgenden näher beschriebene erfindungsgemäße Verfahren gelöst werden.

Gegenstand der Erfindung ist ein Verfahren zur Herstellung eines Isolationskörpers auf Basis eines fein- und offenzelligen Polyurethan/Polyisocyanuratschaums in einer Kavität eines Formwerkzeugs umfassend

a. gegebenenfalls Einlegen eines Einlegeteils in die Kavität des Formwerkzeug, wobei das Einlegeteil gegebenenfalls vorgeformt sein kann,

b. Einlegen einer Barrierefolie in die Kavität oder, soweit vorhanden, in oder auf das Einlegeteil,

c. Anlegen eines Druckes von 8-30 bar in der Kavität,

d. Injizieren eines Polyurethanreaktivgemisches, welches überkritisches $CO_2$ enthält, in die mit Druck beaufschlagte Kavität,

e. Entspannen auf Umgebungsdruck nach einer Zeit von 1 bis 40 s gemessen nach der Injektion,

f. Aushärten des Polyurethanreaktivgemisches,

g. Anlegen eines Vakuums in Höhe von 0,001 mbar bis 0,5 mbar in der Kavität,

h. Abdichten vorhandener Löcher/Öffnungen in der Barrierefolie

i. und abschließendes Entformen des resultierenden Isolationskörpers.

Mit dem erfindungsgemäßen Verfahren ist es möglich, Polyurethan-Hartschäume, die eine Rohdichte von 35 - 300 kg/m$^3$ und eine Offenzelligkeit von > 90% aufweisen und bei denen die Zellen einen durchschnittlichen Durchmesser von < 180 μm haben, herzustellen.

Bevorzugt wird im erfindungsgemäßen Verfahren zur Herstellung eines Polyurethan-basierten Isolationskörpers zwischen Schritt b) und c) und/oder zwischen Schritt f) und g) ein Gasfänger-Material ("Getter" Material) eingebracht. Dieses kann mögliche vorhandene Restgase und Feuchtigkeit binden. Gasfänger bestehen aus Legierungen, die insbesondere auf Barium, Zirkonium, Barium/Lithium oder Zirkonium/Vanadium/Frankium basieren. Besonders bevorzugt sind Legierungen aus Alkalimetallen, Erdalkalimetallen, Titan, Zirkonium oder Vanadium und Legierungen aus einem oder mehreren der genannten Metalle. Es können aber auch Metalloxide eingesetzt werden, wie beispielsweise Gasfänger auf der Basis von ca. 80-90 Gew.-% CaO, ca. 10-12,5 Gew.-% Co$_3$O$_4$ und ca. 3-5 Gew.-% Barium. Die Gasfänger können als loses Pulver oder als komprimiertes Pulver oder in bzw. auf Trägern eingesetzt werden. Im Sinne dieser Anmeldung sind die Begriffe "Gasfänger-Material" und "Getter Material" synonym.

Ein Einlegeteil kann beispielsweise eine Halbschale von Rohrisolierungen, das Gehäuse eines Boilers, eines Kühlschrankes, einer Kühlschranktür oder einer Gefriertruhe aus Metall oder Kunststoff sein. Des Weiteren kann es sich bei Einlegeteilen um beispielsweise eine Wand aus Metall oder Kunststoff oder ein Blechteil handeln.

Mit dem erfindungsgemäßen Verfahren ist es möglich, Isolationskörper auf Basis von harten, fein-und offenzelligen PUR/PIR-Schäumen unter Verwendung von überkritischem $CO_2$ herzustellen, wobei die Barrierefolie direkt in die Kavität des Formwerkzeugs eingelegt werden kann.

Eine möglichst hohe Offenzelligkeit des Schaums im Isolationskörper kombiniert mit einer kleinen Zellgröße ist für bestimmte Anwendungen von Interesse, bei denen diese Schaumeigenschaft die Möglichkeit eröffnet, durch Anlegen von Unterdruck die Wärmeleitfähigkeit des Schaumes zu reduzieren.

Die entstandenen Isolationskörper werden auch Vakuumisolationspaneele genannt. Diese bestehen aus einem Kernmaterial und einer Barrierefolie als gasdichte Umhüllung. Bei der verwendeten Umhüllung kommt es auf eine sehr hohe Gasdichtigkeit an. Die erfindungsgemäßen Vakuumisolationspaneele werden daher in der Regel mit einer oder mehreren Folien aus Kunststoff oder Metall, insbesondere mit einer mit ein- oder mehreren Metallbedampften Schichten oder Metalloxidbedampften oder Siliciumoxidbedampften versehenen Kunststofffolie als Barrierefolie umhüllt, die vor dem Einbringen des Polyurethanreaktivgemisches in die Werkzeugkavität eingebracht wird. Als Kunststofffolien eignen sich beispielsweise kaschierte oder coextrudierte Folien, die Schichten aus Polyester, Polyamid, Polyvinylalkohol, Polyethylen und/oder Polypropylen aufweisen. Aufgrund der höheren Gasdichtigkeit werden bevorzugt metallisierte Kunststofffolien, insbesondere Aluminiumverbundfolien als Barrierefolie eingesetzt. Bevorzugt weist die Barrierefolie eine Dicke im Bereich von 10 bis 500 $\mu$m, bevorzugt im Bereich von 50 bis 200 $\mu$m auf. Die Dicke der Metallschicht liegt bevorzugt im Bereich 0,1 bis 15 $\mu$m.

Besonders bevorzugt wird als Polyurethanreaktivgemisch ein Gemisch eingesetzt, das folgende Komponenten enthält:

A) eine Isocyanat-reaktive Komponente enthaltend

A1) mindestens eine Polyolkomponente mit einer Funktionalität f von > 2,5, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen, wobei der Anteil aller in der Komponente A1) vorhandenen primären OH-Funktionen an der Gesamtzahl der endständigen OH-Funktionen in der Komponente A1) mindestens 30% beträgt,

A2) mindestens eine Katalysatorkomponente, welche über Zerewitinoff-aktive Wasserstoffe verfügt,

A3) mindestens eine zellöffnende Verbindung,

A4) überkritisches $CO_2$

A5) gegebenenfalls Treibmittel ausgenommen überkritisches $CO_2$ und

A6) gegebenenfalls Hilfs- und/oder Zusatzstoffe

und

B) mindestens eine Polyisocyanatkomponente,
wobei die Komponente B) zur Komponente A) in einem Verhältnis der Anzahl der Mole an NCO-Gruppen aus B) zu der Anzahl der Mole an OH Gruppen aus A1) multipliziert mit 100 von 80 bis 400 eingesetzt wird.

In dieser Anmeldung verwendete Bezeichnungen haben die folgende Bedeutung:
Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Mit "Funktionalität" oder "f" einer Komponentenmischung ist im Sinne dieser Anmeldung jeweils die zahlengemittelte Funktionalität der Mischung gemeint, auf die sich die Angabe bezieht. Mit Funktionalität der Polyol-Komponente A1) ist somit beispielsweise die zahlenmittlere Funktionalität der Mischung aus den in der Komponente A1 enthaltenden Polyolen in Bezug auf alle enthaltenen Isocyanat-reaktiven Funktionen gemeint.

Mit "Molgewicht" oder "Molmasse" bzw. "$M_n$" ist im Sinne dieser Anmeldung jeweils die zahlengewichtete mittlere Molmasse gemeint.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

Die Isocyanat-reaktive Komponente A) enthält mindestens eine Polyolkomponente A1) ausgewählt aus der Gruppe bestehend aus Polyetherpolyolen, Polyesterpolyolen, Polyetheresterpolyolen, Polycarbonatpolyolen und Polyether-Polycarbonatpolyolen.

Der Anteil an primären OH - Funktionen an der Gesamtzahl der endständigen OH - Funktionen aller in der Komponente A) eingesetzten Polyole beträgt mindestens 30 %, bevorzugt mindestens 35 %, insbesondere bevorzugt mindestens 38 %.

Die Polyolkomponente A1) zeichnet sich weiterhin dadurch aus, dass sie eine Funktionalität f von > 2,5, bevorzugt ≥ 2,6 - ≤ 6,5 und besonders bevorzugt ≥ 2,8 - ≤ 6,1 aufweist.

Die Polyolkomponente A1) weist bevorzugt eine Hydroxylzahl von 280 - 600 mg KOH/g, besonders bevorzugt von 300 - 580 mg KOH/g und insbesondere bevorzugt von 350 - 540 mg KOH/g auf

Im Sinne dieser Anmeldung kann es sich bei "einem Polyetherpolyol" auch um eine Mischung unterschiedlicher Polyetherpolyole handeln, analog gilt dies für die weiteren hier aufgeführten Polyole.

Bei den erfindungsgemäß verwendbaren Polyetherpolyolen handelt es sich um die dem Fachmann bekannten, in der Polyurethansynthese einsetzbaren Polyetherpolyole.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Bevorzugt enthält die Isocyanat-reaktive Komponente A) bezogen auf ihr Gesamtgewicht mindestens 50 Gew.-%, bevorzugt mindestens 60 Gew.-%, insbesondere bevorzugt mindestens 70 Gew.-% Polyetherpolyol. In einer bevorzugten Ausführungsform besteht die Komponente A1) zu 100 Gew.-% aus Polyetherpolyol.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit ≥ 1 bis ≤ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit $CO_2$ erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols für Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Polyetherpolyole, Polyethercarbonatpolyole und Polyetheresterpolyole mit einem hohen Anteil an primären OH-Funktionen werden erhalten, wenn die zur Alkoxylierung eingesetzten Alkylenoxide einen hohen Anteil an Ethylenoxid aufweisen. Insbesondere beträgt der molare Anteil an Ethylenoxidstrukturen, bezogen auf die Gesamtheit der in den Polyolen der Komponente A1 vorhandenen Alkylenoxidstrukturen, mindestens 50 mol-%. Der Einsatz von 100 mol % Ethylenoxid ist ebenfalls eine bevorzugte Ausführungsform.

Weiterhin können in der Isocyanat-reaktiven Komponente A) niedermolekulare Isocyanat-reaktive Verbindungen enthalten sein, insbesondere können di- oder trifunktionelle Amine und Alkohole, besonders bevorzugt Diole und/oder Triole mit Molmassen $M_n$ kleiner als 400 g/mol, vorzugsweise von 60 bis 300 g/mol, zum Einsatz kommen, z.B. Triethanolamin, Diethylenglykol, Ethylenglykol, Glycerin. Sofern zur Herstellung der Polyurethanhartschaumstoffe solche niedermolekularen Isocyanat-reaktiven Verbindungen Anwendung finden, z.B. in der Funktion als Kettenverlängerungsmittel und/oder Vernetzungsmittel, und diese nicht auch unter die Definition der Komponente A1) fallen, kommen diese zweckmäßigerweise in einer Menge von bis zu 5 Gew.-%, bezogen auf das Gesamtgewicht der Komponente A) zum Einsatz.

Außerdem können in der Komponente A) weitere Isocyanat-reaktive Verbindungen enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Eine bevorzugte Isocyanat-reaktive Komponente A) besteht zu mindestens 65 Gew.-%, insbesondere mindestens 80 Gew.-% und ganz besonders bevorzugt zu mehr als 90 Gew.-% aus der Polyolkomponente A1), die eine Hydroxylzahl zwischen 280 bis 600 mg KOH/g und eine Funktionalität von $\geq 2,8$ bis $\leq 6,0$ aufweist, und der Anteil an primären OH-Funktionen in der Komponente A) beträgt mindestens 35 % (bezogen auf alle endständigen OH-Funktionen in der Komponente A).

Die Isocyanat-reaktive Komponente A) kann mindestens eine oder mehrere zellöffnende Verbindungen A3) enthalten. Zellöffnende Verbindungen sind beispielsweise im Kunststoff-Handbuch, Band 7, Polyurethane, Carl Hanser Verlag, München / Wien, 3. Auflage, 1993, Seiten 104-127 beschrieben. Es handelt sich beispielsweise um Silikone, wie Polyether-Polydimethylsiloxan-Copolymere, oder organische Polymere, z.B. solche auf Basis Polybutadien (z.B. Ortegol 500 und 501 von Evonik Industries), Tenside, wie z.B. das Natriumsalz von ethoxyliertem und sulfatisiertem Isotridecylalcohol, welches unter dem Handelsnamen Sermul EA266 (Elementis Specialties, Niederlande) erhältlich ist, sowie Mischungen unterschiedlicher Komponenten, z.B. Mischungen aus aminstabilisierten, makromolekularen, ungesättigten Kohlenwasserstoffen und Phthalsäureestern. Bevorzugt sind Zellöffner auf Basis Polybutadien. Bevorzugt werden die zellöffnenden Komponenten in Mengen von max. 1 Gew.-%, bezogen auf die Isocyanat-reaktive Komponente A), eingesetzt. Besonders bevorzugt ist der Einsatz von 0,1 - 1,0 Gew.-% eines organischen Polymers auf Basis Polybutadien, ganz besonders bevorzugt 0,25 - 0,75 Gew.-%, jeweils bezogen auf das Gesamtgewicht der Komponente A).

Hilfs- und Zusatzstoffe A6), die in dem erfindungsgemäßen Verfahren eingesetzt werden können, sind die aus dem Stand der Technik und dem Fachmann bekannten und üblichen Hilfs- und Zusatzstoffe. Genannt seien beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Einige der bekannten zellöffnenden Verbindungen, z.B. die Silikone, können auch gleichzeitig Aufgaben als oberflächenaktive Substanzen, Stabilisatoren oder Zellregler übernehmen. In diesem Fall können von diesen Komponenten auch höhere als die oben für die zellöffnenden Verbindungen genannten, bevorzugten Mengen eingesetzt werden.

Es werden häufig Polyether-Polydimethylsiloxan-Copolymere verwendet, vorzugsweise ein Polyethylenoxid-Polyether mit Oligodimethylsiloxan-Endgruppen, wobei die Zahl der Dimethylsiloxan-Einheiten vorzugsweise $\leq 5$ ist.

Als Stabilisatoren können auch gesättige und ungesättigte Kohlenwasserstoffe wie Paraffine, Polybutadiene, Fettalkohole sowie Ester, z.B. Ester von Carbonsäuren, eingesetzt werden.

Weiterhin können als Stabilisatoren Tenside eingesetzt werden, beispielsweise alkoxylierte Alkanole wie Ether von linearen oder verzweigten Alkanolen mit $\geq 6$ bis $\leq 30$ Kohlenstoffatomen mit Polyalkylenglykolen mit $\geq 5$ bis $\leq 100$ Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Bevorzugt enthält die Komponente A) insgesamt maximal 5 Gew.-% Tenside, insbesondere bevorzugt maximal 3 Gew.-%, mehr bevorzugt weniger als 2 Gew.-% und insbesondere bevorzugt maximal 1,6 Gew.-% an Tensiden, bezogen auf das Gesamtgewicht der Komponente A).

Für die Herstellung des PUR/PIR-Hartschaums werden Katalysatoren A2) eingesetzt. Als Katalysatoren werden üblicherweise Verbindungen verwendet, welche die Reaktion der Hydroxylgruppen bzw. isocyanatreaktiven Gruppen enthaltenden Verbindungen der Komponenten mit den Isocyanatgruppen der Komponente B beschleunigen.

Die Katalysatoren enthalten vorzugsweise mindestens eine katalytisch aktive Aminverbindung mit funktionellen Gruppen, welche über Zerewitinoff-aktive Wasserstoffe verfügen und daher mit Isocyanat reagieren können (sogenannte "einbaubare Katalysatoren"). Beispiele für einsetzbare einbaubare Katalysatoren sind beispielsweise Bis-dimethylaminopropylharnstoff, Bis(N,N-Dimethylaminoethoxyethyl)carbamat, Di-methylamino-propylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Di¬methyaminopropyl-N,N-dimethylpropan-1,3-diamin, Dimethyl-2-(2-amino¬ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(aminoethylether), 3-Dimethylaminoisopropyl-diisopropanolamin oder Mischungen davon.

In einer bevorzugten Ausführungsform werden die vorgenannten Katalysatoren in einer Menge von $\geq 0,01$ bis < 2 Gew.-%, bezogen auf das Gesamtgewicht der Komponente A) eingesetzt.

Daneben können eine oder mehrere weitere Katalysatorverbindung, insbesondere die für die PUR/PIR - Chemie bekannten katalytisch aktiven Verbindungen eingesetzt werden, neben weiteren Aminverbindungen auch Salze wie z.B.

Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylamino-propyl)-s-hexa¬hydro¬triazin, Tetramethylammoniumhydroxid, Natriumacetat, Natriumoctoat, Kaliumacetat, Kaliumoctoat, Natriumhydroxid.

Die Katalysatoren werden im Allgemeinen in einer Menge von 0,001 bis 5 Gew.-%, insbesondere von 0,05 bis 2,5 Gew.-% bezogen auf das Gewicht der Komponente A, eingesetzt. Besonders bevorzugt werden als Katalysatoren sowohl einbaubare Katalysatoren und nicht einbaubare Katalysatoren eingesetzt. Insbesondere ist es bevorzugt, dass einbaubare Aminverbindungen und katalytisch aktive Salze in Kombination eingesetzt werden.

In der Herstellung des PUR/PIR-Hartschaums wird überkritisches Kohlendioxid (A4) eingesetzt und gegebenenfalls eine zusätzliche Treibmittelkomponente A5) verwendet. Es werden vorzugsweise 0,5 - 30 Gewichtsteile zusätzliche Treibmittel A5) bezogen auf 100 Gewichtsteile der Komponente A verwendet. Als zusätzliche Treibmittel werden vorzugsweise physikalische Treibmittel eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren.

Bevorzugt sind die physikalischen Treibmittel ausgewählt aus Kohlenwasserstoffen (z. B. n-Pentan, iso-Pentan, cyclo-Pentan, Butan, Isobutan, Propan), Ethern (z.B. Methylal), halogenierten Ethern, perfluorierten und teilfluorierten Kohlenwasserstoffen mit 1 bis 8 Kohlenstoffatomen, z. B. Perfluorhexan, HFC 245fa (1,1,1,3,3-Pentafluorpropan), HFC 365mfc (1,1,1,3,3-Pentafluorbutan), HFC 134a oder deren Mischungen verwendet, sowie (hydro)fluorierte Olefine, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie deren Gemische untereinander.

Zusätzlich zu oder auch statt der oben aufgeführten physikalischen Treibmittel können auch chemische Treibmittel verwendet werden. Bei diesen handelt es sich besonders bevorzugt um Wasser und / oder Ameisensäure.

Die Komponente B) ist ein Polyisocyanat, also ein Isocyanat mit einer NCO-Funktionalität von $\geq 2$. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4-und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'-und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente B) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und folgende Strukturformel aufweisen: $C_{15}H_{10}N_2O_2 [C_8H_5NO]_n$, wobei n = ganze Zahl > 0, bevorzugt n = 1, 2, 3 und 4, ist. Höherkernige Homologe $C_{15}H_{10}N_2O_2$ $[C_8H_5NO]_m$, m = ganze Zahl $\geq 4$) können ebenfalls im Gemisch aus organischen Polyisocyanaten a) enthalten sein. Als Isocyanatkomponente B) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Isocyanatkomponente B) eingesetzt werden. Die Präpolymere sind herstellbar durch Umsetzung eines oder mehrerer Polyisocyanate mit einem oder mehreren der vorgenannten Polyole.

Es ist möglich, dass das Isocyanat ein Präpolymer ist, welches erhältlich ist durch Reaktion eines Isocyanats mit einer NCO-Funktionalität von $\geq 2$ und Polyolen mit einem Molekulargewicht von $\geq 62$ g/mol bis $\leq 8000$ g/mol und OH-Funktionalitäten von $\geq 1,5$ bis $\leq 6$.

Der NCO-Gehalt beträgt bevorzugt von $\geq 29,0$ Gew.-% bis $\leq 32,0$ Gew.%, und weist bevorzugt eine Viskosität bei 25°C von $\geq 80$ mPas bis $\leq 2000$ mPas, besonders bevorzugt von $\geq 100$ mPas bis $\leq 800$ mPas auf (dynamische Viskosität bestimmt nach DIN 53019, bei 25°C).

Die Anzahl der NCO-Gruppen in der Polyisocyanatkomponente B) und die Anzahl der gegenüber Isocyanaten reaktiven Gruppen der Komponente A) können beispielsweise in einem Zahlenverhältnis von $\geq 50: 100$ bis $\leq 500:100$ zueinander stehen. Zur Herstellung der PolyurethanHartschaumstoffe werden in der Regel die Komponenten A) und B) in solchen Mengen zur Umsetzung gebracht, dass die Isocyanat-Kennzahl der Rezeptur 80 - 150, bevorzugt 90 - 130, besonders bevorzugt 95 -110 beträgt. In diesem Bereich werden bevorzugt Urethangruppen gebildet. In einer anderen bevorzugten Ausführungsform beträgt die Isocyanat-Kennzahl 150 - 400. In diesem Bereich weisen die Schaumstoffe einen hohen Anteil an Isocyanurat-Funktionen auf, welche z.B. eine inhärente Flammwidrigkeit der Schaumstoffe bewirken.

Die Vermischung der Komponenten des Reaktionsgemisches kann unter Druck in einem Hochdruck-Mischkopf erfolgen. Als Anwendungsgebiete der erfindungsgemäß hergestellten PUR/PIR-Isolationskörper sind insbesondere zu nennen die technische Isolierung von Geräten wie Kühlschränken, Kühltruhen, Kühlgefrierkombinationen und Boilern, Kühlcontainern und Kühlboxen sowie von Rohren.

**Beispiele**

**Verwendete Normen bzw. Messgeräte:**

Bestimmung der Rohdichte: Schaumstoffe aus Kautschuk und Kunststoffen - Bestimmung der Rohdichte (ISO 845:2006); Deutsche Fassung EN ISO 845:2009

Bestimmung der Offenzelligkeit: - Bestimmung des Volumenanteils offener und geschlossener Zellen (ISO 4590:2002); Deutsche Fassung EN ISO 4590:2003

Bestimmung der Druckfestigkeit: Harte Schaumstoffe -Bestimmung der Druckeigenschaften (ISO 844:2014); Deutsche Fassung EN ISO 844:2014

Bestimmung der OH-Zahl: Die Bestimmung der Hydroxylzahl - Teil 2: Verfahren mit Katalysator gemäß DIN 53240-2, Stand November 2007

Bestimmung der Zellgröße: Lichtmikroskopische Auswertung via Lichtmikroskop VHX 5000; Der zu vermessende Probekörper wird an 3 unterschiedlichen Stellen jeweils über einen kreisförmigen Bereich mit einem Durchmesser von 5 mm untersucht. Hierbei wird die Auflösung so gewählt, dass der ausgewählte Bereich mehr als 100 Zellen erfasst. Danach werden alle Zellen mit der frei erhältlichen Software ImageJ ausgewertet und aus den erhaltenen ECD Werten (Equivalent Circle Diameter) der D90 Wert (90% der Zellen sind kleiner als dieser Wert) sowie der durchschnittliche Zelldurchmesser berechnet.

Die Angabe der Funktionalität f in Tabelle 1 bezieht sich auf die zahlenmittlere Funktionalität der Mischung aus den in der Formulierung enthaltenden Polyolen.

Die Angabe der Dauer der Schaumherstellung in Tabelle 1 beschreibt die Zeitspanne zwischen dem Zeitpunkt der Vermischung von $CO_2$ und der Polyolformulierung und dem Zeitpunkt der Entformung bzw. der Evakuierung des ausgehärteten PU-Schaums.

Bestimmung der Wärmeleitfähigkeit:

1) Wärmeleitzahlmessung nach der dynamischen Hitzdrahtmethode:

In die Probe wird ein Platin-Draht (Durchmesser von 100 $\mu$m) eingebettet, der gleichzeitig als Heizelement und Temperatursensor dient. Die Messapparatur ist in eine Vakuumkammer eingebaut, deren Innendruck mittels Drucksensor (Typ Baratron®, Firma MKS Instruments Deutschland GmbH, München) bestimmt wird. Der gewünschte Gasdruck wird durch kontrolliertes Belüften mit gasförmigem Stickstoff über ein Nadelventil eingestellt.

Während der Messung wird der Draht mit einer konstanten elektrischen Leistung beheizt. Die zeitliche Entwicklung der mittleren Temperatur des Hitzdrahts lässt sich anhand des temperaturabhängigen Drahtwiderstandes erfassen, der wiederum durch simultane Messung des Spannungsabfalls an einem in Serie zum Hitzdraht geschalteten Shuntwiderstand und des Spannungsabfalls über die Potentialabgriffe am Hitzdraht bestimmt wird. Als Spannungsmesser wurden zwei Multimeter (Typ HP3457A, Firma Hewlett-Packard, Palo Alto, USA) verwendet. Dieser Temperaturverlauf hängt von der Wärmeleitfähigkeit der Probe ab. Die Wärmeleitfähigkeit der Probe wird durch Anpassung einer analytischen Lösung (siehe Ebert H.-P. et al., High Temp. - High Press., 1993, 25, 391-402) an diesen zeitabhängigen Temperaturverlauf unter Berücksichtigung des thermischen Kontaktwiderstandes zwischen Probe und Draht sowie von Wärmeverlusten in axialer Richtung ermittelt. Schaumkörper mit den Maßen 50 x 50 x 100 mm bei 23 °C.

2) Wärmeleitzahlmessung mit einem Wärmestrommessplatten-Gerät nach DIN 52616 (11/1977); Schaumkörper mit den Maßen 200 x 200 x 30 mm bei 10 °C und/oder 23 °C.

Gemäß den in der nachfolgenden Tabelle 1 aufgeführten Rezepturen wurden $CO_2$ und n-Pentan getriebene Polyurethanschäume hergestellt. Wenn nicht anders vermerkt, sind Mengenangaben als Gewichtsteile zu verstehen. Es kamen folgende Stoffe und Materialien zum Einsatz:

| | |
|---|---|
| Polyol 1: | Polyetherpolyol auf Basis Trimethylolpropan und Propylenoxid mit einer Hydroxylzahl von 800 mg KOH/g, einer Funktionalität von 3 und einer Viskosität von 6100 mPa·s bei 25 °C |
| Polyol 2: | Polyetherpolyol auf Basis Trimethylolpropan und Ethylenoxid mit einer Hydroxylzahl von 550 mg KOH/g, einer Funktionalität von 3 und einer Viskosität von 505 mPa·s bei 25 °C |
| Polyol 3: | Polyetherpolyol auf Basis Trimethylolpropan und Propylenoxid mit einer Hydroxylzahl von 550 mg KOH/g, einer Funktionalität von 3 und einer Viskosität von 1800 mPa·s bei 25 °C |
| Polyol 4: | Polyetherpolyol auf Basis 1,2-Propandiol und Propylenoxid mit einer Hydroxylzahl von 56 mg KOH/g, einer Funktionalität von 2 und einer Viskosität von 310 mPa·s bei 25 °C |
| Polyol 5: | Polyetherpolyol auf Basis 1,2 Propandiol und Propylenoxid mit einer Hydroxylzahl von 112 mg KOH/g, einer Funktionalität von 2 und einer Viskosität von 140 mPa·s bei 25 °C |
| Polyol 6: | Polyetherpolyol auf Basis Glycerin und Propylenoxid mit einer Hydroxylzahl von 231 mg KOH/g, einer Funktionalität von 3 und einer Viskosität von 350 mPa·s bei 20 °C |
| Tegostab B 8443: | Schaumstabilisator (Evonik) |
| Ortegol 500: | Zellöffner (Evonik) |
| Ortegol 501: | Zellöffner (Evonik) |
| Desmorapid PU 1792: | Katalysator, Kaliumacetat 25%ig in Diethylenglykol (Covestro) |
| Dabco NE1070: | Katalysator, 3-(Dimethylamino)propylharnstoff (Air Products) |
| n-Pentan: | Treibmittel |
| Isocyanat: | Gemisch aus monomerem und polymerem MDI mit einer Viskosität von ca. 290 mPa·s bei 20 °C (Desmodur 44V20L, Covestro) |
| Barrierefolie: | Mehrschichtfolie bestehend aus Polyethylenterephthalat, Polyethylen und Aluminium. |

**Herstellung von PU-basierten Isolationskörpern, Beispiel 1 (erfindungsgemäß) sowie 3, 4 und 5 (Vergleich):**

Auf einer Hochdruckanlage wurde eine Polyolformulierung aus den in der nachfolgenden Tabelle 1 aufgeführten Polyolen, Stabilisatoren und Katalysatoren hergestellt. Diese Formulierung wurde mit einem Statikmischer bei einem Druck von 160 bar und einer Temperatur von 50 °C mit dem Treibmittel $CO_2$ (überkritische Bedingungen) vermischt. In einem Hochdruckmischkopf wurde diese Mischung mit dem Isocyanat, das mit einem Druck von 160 bar und einer Temperatur von 35 °C gefördert wurde, vermischt. Das so erhaltene Reaktionsgemisch wurde in eine unter Druck stehende Kavität einer geschlossenen Werkzeugform mit einer Formtemperatur von 50 °C injiziert. Die Form kann mit einer Barrierefolie ausgestattet sein. Nach Ende der Injektion (sogenannte Schusszeit) wurde der Druck eine Zeit lang (sogenannte Liegezeit) gehalten und dann innerhalb von <2 s auf Umgebungsdruck entspannt (sogenannte Entspannungsdauer). Die genauen Rezepturen und Anlagenparameter sind in Tabelle 1 zusammengefasst, die Ergebnisse der physikalischen Untersuchungen der Isolationskörper, insbesondere der Schäume in Tabelle 2.

**Herstellung von Polyurethanformschaumkörpern, Beispiel 6 (Vergleich):**

Zur Herstellung von Polyurethan-basierten Formschaumkörpern wurde eine Polyolformulierung aus den in der nachfolgenden Tabelle 1 aufgeführten Polyolen, Stabilisatoren und Katalysatoren sowie dem Treibmittel hergestellt. Zur Herstellung des Reaktionsgemisches wurde das Isocyanat mittels eines Pendraulikrührers für 7 Sekunden bei 23 °C vermischt und in eine Form gegeben. Die Form wurde unmittelbar verschlossen. Nach 5 Minuten wurde die Form geöffnet und der Formkörper entformt. Die genaue Rezeptur ist in Tabelle 1 zusammengefasst, die Ergebnisse der physikalischen Untersuchungen am Formschaum in Tabelle 2.

**Beispiel 2 (Vergleich):**

Sämtliche Daten sind der Druckschrift WO2018/018571 A1, Beispiel 2 entnommen und zum Vergleich in die Tabellen 1 und 2 eingefügt.

**Tabelle 1**

| | | Beispiel 1 | Vergleichsbeispiel 2 | Vergleichsbeispiel 3 | Vergleichsbeispiel 4 | Vergleichsbeispiel 5 | Vergleichsbeispiel 6 |
|---|---|---|---|---|---|---|---|
| | | | WO 2018/018571 A1, **Example 2** | | | | |
| | | | | | | | |
| Polyol 1 | [Gew.-Teile] | 13,00 | - | 13,00 | 13,00 | 13,00 | 13,00 |
| Polyol 2 | [Gew.-Teile] | 32,50 | - | 32,50 | - | - | - |
| Polyol 3 | [Gew.-Teile] | - | - | - | 32,50 | 32,50 | 32,50 |
| Polyol 4 | [Gew.-Teile] | 13,50 | - | 13,50 | 13,50 | 13,50 | 13,50 |
| Polyol 5 | [Gew.-Teile] | 9,50 | - | 9,50 | 9,50 | 9,50 | 9,50 |
| Polyol 6 | [Gew.-Teile] | 27,00 | - | 27,00 | 27,00 | 27,00 | 27,00 |
| VORATEC™ SD301 | [Gew.-Teile] | - | 47,55 | - | - | - | - |
| VORANOL™ CP 260 | [Gew.-Teile] | - | 38,00 | - | - | - | - |
| TERCAROL 5903 | [Gew.-Teile] | - | 9,50 | - | - | - | - |
| Tegostab B 8443 | [Gew.-Teile] | 1,50 | - | 1,50 | 1,50 | 1,50 | 1,50 |
| Ortegol 500 | [Gew.-Teile] | 0,40 | - | 0,40 | - | - | - |
| Ortegol 501 | [Gew.-Teile] | 0,10 | - | 0,10 | - | - | - |
| L6164 | [Gew.-Teile] | - | 2,00 | - | - | - | - |
| Desmorapid PU 1792 | [Gew.-Teile] | 2,50 | - | 2,50 | 2,50 | 2,50 | 2,50 |
| Dabco NE1070 | [Gew.-Teile] | 1,65 | - | 1,65 | 1,65 | 1,65 | 1,65 |
| POLYCAT®-5 | [Gew.-Teile] | - | 0,48 | - | - | - | - |
| POLYCAT®-8 | [Gew.-Teile] | - | 1,90 | - | - | - | - |
| POLYCAT®-41 | [Gew.-Teile] | - | 0,57 | - | - | - | - |
| Funktionalität f der Polyole | | 2,9 | 3,1 | 2,9 | 2,9 | 2,9 | 2,9 |
| Isocyanat | [Gew.-Teile] | 97,20 | - | 97,20 | 97,20 | 97,20 | 97,20 |
| Papi™ -135C | | - | 101,00 | - | - | - | - |

(fortgesetzt)

| | | Beispiel 1 | Vergleichsbeispiel 2 | Vergleichsbeispiel 3 | Vergleichsbeispiel 4 | Vergleichsbeispiel 5 | Vergleichsbeispiel 6 |
|---|---|---|---|---|---|---|---|
| | | | WO 2018/018571 A1, **Example 2** | | | | |
| n-Pentan | [Gew.-Teile] | - | - | - | - | - | 14,40 |
| überkritisches $CO_2$ | [Gew.-Teile] | 3,56 | Ja; Menge n.a. | 3,50 | 3,57 | 5,90 | - |
| Index | NCO/OH | 100,00 | 115,00 | 100,00 | 100,00 | 100,00 | 100,00 |
| Gasgegendruck in der Kavität | [bar] | 7,7 | n.a. | 8,3 | 8,2 | 13,0 | - |
| Schusszeit | [s] | 2,0 | n.a. | 1,7 | 2,0 | 1,2 | - |
| Liegezeit | [s] | 4,0 | 560‡ | 4,3 | 8,0 | 9,8 | - |
| Entspannungsdauer | [s] | < 2 | n.a. | <2 | <2 | < 2 | - |
| Dauer der Schaumherstellung | [min] | 11 | 39 + x† | 11 | 11 | 11 | - |
| Barrierefolie | | ja | ja | nein | nein | nein | nein |

‡ Die Liegezeit im Vergleichsbeispiel 2 ist die Zeit zwischen Hinzufügen der Polyolformulierung in den Reaktor bis Injizieren des PU Gemisches in die mit Barrierematerial versehene Form. Die Dauer des Injizierens ist nicht angegeben.

† Die Dauer zwischen Injizieren und Evakuieren des ausgehärteten PU-Schaums ist nicht angegeben.

n.a. - nicht angegeben

**Tabelle 2**

| | | Beispiel 1 | Vergleichsbeispiel 2 | Vergleichsbeispiel 3 | Vergleichsbeispiel 4 | Vergleichsbeispiel 5 | Vergleichsbeispiel 6 |
|---|---|---|---|---|---|---|---|
| Mechanik | | | | | | | |
| Rohdichte | [kg/m$^3$] | 72 | 115[1] | 70 | 71 | 45 | 39 |
| Druckfestigkeit parallel bei 10% Stauchung | [MPa] | n.b.[2] | n.a.[3] | 0,32 | n.b.[2] | n.b.[2] | 0,16 |
| Druckfestigkeit quer bei 10% Stauchung | [MPa] | n.b.[2] | n.a.[3] | 0,22 | n.b.[2] | n.b.[2] | 0,11 |
| Zellinnendruck | [mbar] | 0,3 | 2 | 1013 | 1013 | 1013 | 1013 |
| Wärmeleitfähigkeit | [mW·m$^{-1}$·K$^{-1}$] | 9,6 @ 10°C | 13,0 @ 23°C | 34,9 @ 23°C[4] | 23,8 @ 23°C 22,7 @ 10°C | 21,9 @ 23°C 20,5 @ 10°C | 25,3 @ 23°C 29,1 @ 10°C |
| Offenzelligkeit | [%] | 96 | 95 | 95 | 4,2 | 6,4 | 8,0 |
| durchschnittliche Zellgröße | [μm] | 77 | 9 | 61 | 72 | 75 | 212 |
| D90 | [μm] | 101 | n.a.[3] | 86 | 92 | 107 | 316 |

[1] berechnet aus der angegebenen Porosität von 90 mit einer typischen PU-Dichte von 1150 kg/m$^3$

[2] nicht bestimmt

[3] nicht angegeben

[4] bestimmt nach der Hitzdrahtmethode, siehe Bestimmung der Wärmeleitfähigkeit 1)

Das Beispiel 1 zeigt, dass der mit dem in dieser Erfindung beschriebenen Verfahren hergestellte Isolationskörper einen niedrigen Lambda-Wert aufweist. Man benötigt einen Prozessschritt weniger als in Vergleichsbeispiel 3. Hier müsste der hergestellte Schaum noch laminiert und evakuiert werden.

Das in der Druckschrift WO 2018/018571 A1 beschriebene Beispiel 2 (hier Vergleichsbeispiel 2) zeigt, dass die Prozessdauer deutlich länger als im erfindungsgemäßen Beispiel 1 ist und die Wärmeleitfähigkeit mit 13 mW·m$^{-1}$·K$^{-1}$ deutlich höher ist als im erfindungsgemäßen Beispiel 1.

Das Vergleichsbeispiel 3 zeigt, dass der unter vergleichbaren Bedingungen hergestellte Schaum ohne Evakuierung und Barrierefolie einen deutlich höheren Lambda-Wert aufweist.

Auch der im Vergleichsbeispiel 4 hergestellte Schaum zeigt trotz seiner Geschlossenzelligkeit einen deutlich höheren Lambda-Wert als der in Beispiel 1. Selbst bei einer Rohdichteerniedrigung von 71 auf 45 kg/m$^3$ und Geschlossenzelligkeit, wie in Vergleichsbeispiel 5 gezeigt, ist der Lambda-Wert noch deutlich höher als der in Beispiel 1.

Der im Vergleichsbeispiel 6 hergestellte Schaum zeigt trotz seiner Geschlossenzelligkeit und der Verschäumung mit Pentan als Treibmittel einen deutlich höheren Lambda-Wert als der im erfindungsgemäßen Beispiel 1.

## Patentansprüche

1. Verfahren zur Herstellung eines Isolationskörpers auf Basis eines fein-und offenzelligen Polyurethan/Polyisocyanuratschaums in einer Kavität eines Formwerkzeugs umfassend

   a. gegebenenfalls Einlegen eines gegebenenfalls vorgeformten Einlegeteils in die Kavität des Formwerkzeugs,
   b. Einlegen einer Barrierefolie in die Kavität oder, soweit vorhanden, auf oder in das Einlegeteil,
   c. Anlegen eines Druckes von 8-30 bar in der Kavität,
   d. Injizieren eines Polyurethanreaktivgemisches, welches überkritisches $CO_2$ enthält, in die mit Druck beaufschlagte Kavität,
   e. Entspannen auf Umgebungsdruck nach einer Zeit von 1 bis 40 s gemessen nach der Injektion,
   f. Aushärten des Polyurethanreaktivgemisches,
   g. Anlegen eines Vakuums in Höhe von 0,001 mbar bis 0,5 mbar in der Kavität,
   h. Abdichten vorhandener Löcher in der Barrierefolie
   i. und abschließendes Entformen des resultierenden Isolationskörpers.

2. Verfahren zur Herstellung eines Polyurethan-basierten Isolationskörpers gemäß Anspruch 1, wobei zwischen Schritt b) und c) und/oder zwischen Schritt f) und g) ein Gasfänger-Material eingebracht wird.

3. Verfahren gemäß Anspruch 1, **dadurch gekennzeichnet, dass** das Polyurethanreaktivgemisch folgende Komponenten enthält:

   A) Isocyanat-reaktive Komponente enthaltend

   A1) mindestens eine Polyolkomponente mit einer Funktionalität f von > 2,5, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen, wobei der Anteil aller in der Komponente A1) vorhandenen primären OH-Funktionen an der Gesamtzahl der endständigen OH-Funktionen in der Komponente A1) mindestens 30% beträgt,
   A2) mindestens eine Katalysatorkomponente, welche über Zerewitinoff-aktive Wasserstoffe verfügt,
   A3) mindestens eine zellöffnende Verbindung,
   A4) überkritisches $CO_2$,
   A5) gegebenenfalls Treibmittel, ausgenommen überkritisches $CO_2$ und
   A6) gegebenenfalls Hilfs- und/oder Zusatzstoffe
   und

   B) mindestens eine Polyisocyanatkomponente,

   wobei die Komponente B) zur Komponente A) in einem Verhältnis der Anzahl der Mole an NCO-Gruppen aus B) zu der Anzahl der Mole an OH Gruppen aus A1) von 80 bis 400 eingesetzt wird.

## Claims

1. Process for producing an insulation body based on a fine- and open-celled polyurethane/polyisocyanurate foam in a cavity of a mold, comprising

   a. optionally inserting an optionally pre-molded insert into the cavity of the mold,
   b. inserting a barrier film into the cavity or, if present, onto or into the insert,
   c. applying a pressure of 8-30 bar in the cavity,
   d. injecting a polyurethane reactive mixture containing supercritical $CO_2$ into the pressurized cavity,
   e. decompressing to ambient pressure after a time of 1 to 40 s measured after the injection,
   f. curing the polyurethane reactive mixture,
   g. applying a vacuum of 0.001 mbar to 0.5 mbar in the cavity,
   h. sealing any holes in the barrier film
   i. and finally demolding the resulting insulation body.

2. Process for producing a polyurethane-based insulation body according to Claim 1, wherein a gas scavenger material is introduced between step b) and c) and/or between step f) and g).

3. Process according to Claim 1, **characterized in that** the polyurethane reactive mixture contains the following components:

   A) isocyanate-reactive component containing

   A1) at least one polyol component having a functionality f of > 2.5 selected from the group consisting of polyether polyols, polyester polyols, polycarbonate polyols, polyether polycarbonate polyols and polyether ester polyols, wherein the proportion of all primary OH functions present in the component A1) based on the total number of terminal OH functions in the component A1) is at least 30%,
   A2) at least one catalyst component having Zerewitinoff-active hydrogens,
   A3) at least one cell-opening compound,
   A4) supercritical $CO_2$,
   A5) optionally blowing agents with the exception of supercritical $CO_2$ and
   A6) optionally auxiliary and/or additive substances and

   B) at least one polyisocyanate component,

   wherein relative to component A) component B) is employed in a ratio of the number of moles of NCO groups from B) to the number of moles of OH groups from A1) of 80 to 400.

## Revendications

1. Procédé pour la fabrication d'un corps isolant à base d'une mousse de polyuréthane/polyisocyanurate à pores fins et ouverts dans la cavité d'un outil de moulage comprenant

   a. le cas échéant, l'introduction d'une pièce d'insert éventuellement préfaçonnée dans la cavité de l'outil de moulage,
   b. l'introduction d'une feuille formant barrière dans la cavité ou, le cas échéant, sur ou dans la pièce d'insert,
   c. l'application d'une pression de 8-30 bars dans la cavité,
   d. l'injection d'un mélange réactif de polyuréthane, qui contient du $CO_2$ surcritique, dans la cavité sous pression,
   e. la détente à la pression ambiante après une durée de 1 à 40 s, mesurée après l'injection,
   f. le durcissement du mélange réactif de polyuréthane,
   g. l'application d'un vide à hauteur de 0,001 mbar à 0,5 mbar dans la cavité,
   h. l'obturation des trous présents dans la feuille formant barrière
   i. et le démoulage final du corps isolant résultant.

2. Procédé pour la fabrication d'un corps isolant à base de polyuréthane selon la revendication 1, un matériau de piégeage de gaz étant introduit entre les étapes b) et c) et/ou entre les étapes f) et g).

3. Procédé selon la revendication 1, **caractérisé en ce que** le mélange réactif de polyuréthane contient les composants suivants :

   A) un composant réactif avec isocyanate contenant

   A1) au moins un composant polyol présentant une fonctionnalité f > 2,5, qui est choisi dans le groupe constitué par les polyétherpolyols, les polyesterpolyols, les polycarbonatepolyols, les polyéthercarbonatepolyols et les polyétheresterpolyols, la proportion de toutes les fonctions OH primaires présentes dans le composant A1) au nombre total des fonctions OH en position d'extrémité dans la composant A1) étant d'au moins 30%.
   A2) au moins un composant catalytique qui dispose d'hydrogènes actifs selon Zerewitinoff,
   A3) au moins un composé ouvrant les pores,
   A4) du $CO_2$ surcritique,
   A5) le cas échéant des agents gonflants, à l'exception de $CO_2$ surcritique et
   A6) le cas échéant des adjuvants et/ou des additifs et

   B) au moins un composant de polyisocyanate,

le composant B) étant utilisé par rapport au composant A) dans un rapport du nombre de moles de groupes NCO de B) au nombre de moles de groupes OH de A1) de 80 à 400.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200198389 A1
- WO 2011054868 A
- WO 2011054873 A
- WO 2015109488 A1
- WO 2018162372 A1
- WO 2018162372 A
- WO 2018018571 A1
- JP H08303940 A
- EP 2910585 A
- EP 1359177 A
- WO 2010043624 A
- EP 1923417 A

**In der Beschreibung aufgeführte Nicht-Patentliteratur**

- Evacuated insulation panel. Kenneth Mason Publications, 01. August 1996
- Oligo-Polyols for Elastic Polyurethanes. **IONESCU.** Chemistry and Technology of Polyols for Polyurethanes. Rapra Technology Limited, 2005, 55
- Polyester Polyols for Elastic Polyurethanes. **IONESCU.** Chemistry and Technology of Polyols for Polyurethanes. Rapra Technology Limited, 2005, 263
- Polyether Polyols für Rigid Polyurethane Foams. **IONESCU.** Chemistry and Technology of Polyols for Polyurethanes. Rapra Technology Limited, 2005, 321
- Polyester Polyols for Rigid Polyurethane Foams. **IONESCU.** Chemistry and Technology of Polyols for Polyurethanes. Rapra Technology Limited, 2005, 419
- Polyurethane. Kunststoff-Handbuch. Carl Hanser Verlag, 1993, vol. 7, 104-127
- **EBERT H.-P. et al.** *High Temp. - High Press.,* 1993, vol. 25, 391-402